(19) Europäisches Patentamt
European Patent Office
Office européen des brevets

(11) **EP 3 861 417 B1**

(12) **EUROPÄISCHE PATENTSCHRIFT**

(45) Veröffentlichungstag und Bekanntmachung des Hinweises auf die Patenterteilung:
**10.08.2022 Patentblatt 2022/32**

(21) Anmeldenummer: **19783497.1**

(22) Anmeldetag: **04.10.2019**

(51) Internationale Patentklassifikation (IPC):
**G05D 11/13** (2006.01)      **B60S 3/04** (2006.01)

(52) Gemeinsame Patentklassifikation (CPC):
**G05D 11/133;** B60S 3/04

(86) Internationale Anmeldenummer:
**PCT/EP2019/076879**

(87) Internationale Veröffentlichungsnummer:
**WO 2020/070270 (09.04.2020 Gazette 2020/15)**

(54) **FLUESSIGKEITSAUSSTOSSVORRICHTUNG FUER EINE FAHRZEUGWASCHANLAGE UND VERFAHREN ZU IHREM BETRIEB**

LIQUID EJECTION DEVICE FOR A VEHICLE WASH FACILITY, AND METHOD FOR OPERATING SAME

SYSTÈME D'ÉJECTION DE LIQUIDE POUR UNE INSTALLATION DE LAVAGE DE VÉHICULES ET SON PROCÉDÉ DE FONCTIONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.10.2018 DE 102018124656**

(43) Veröffentlichungstag der Anmeldung:
**11.08.2021 Patentblatt 2021/32**

(73) Patentinhaber: **WashTec Holding GmbH**
**86153 Augsburg (DE)**

(72) Erfinder: **CONRAD, Ferdinand**
**86159 Augsburg (DE)**

(74) Vertreter: **Reitstötter Kinzebach**
**Patentanwälte**
**Sternwartstrasse 4**
**81679 München (DE)**

(56) Entgegenhaltungen:
**WO-A1-02/05047     DE-A1-102011 003 615**

**Beschreibung**

Die vorliegende Erfindung betrifft eine Flüssigkeitsausstoßvorrichtung für eine Fahrzeugwaschanlage mit einem Vorratsvolumen, einer stromaufwärts mit dem Vorratsvolumen gekoppelten ersten Zuführungsleitung zum Zuführen einer ersten Flüssigkeit und einer stromaufwärts mit dem Vorratsvolumen gekoppelten Zuführungseinheit zum Zuführen einer zweiten Flüssigkeit. Sie umfasst ferner eine stromabwärts mit dem Vorratsvolumen gekoppelte Entnahmeleitung zum Ableiten einer auszustoßenden Flüssigkeit mit einer Absperreinrichtung zum Absperren eines Flüssigkeitsflusses durch die Entnahmeleitung. Die Erfindung betrifft zudem ein Verfahren zum Betreiben einer Flüssigkeitsausstoßvorrichtung für eine Fahrzeugwaschanlage, bei dem eine erste und eine zweite Flüssigkeit in ein Vorratsvolumen eingeleitet werden.

In verschiedenen technischen Anwendungsbereichen müssen Flüssigkeiten in einem möglichst genauen Verhältnis miteinander gemischt werden. Beispielsweise werden Reinigungsmittel in hochkonzentrierter Form bereitgestellt und zur Anwendung mit Wasser verdünnt. Dabei ist es insbesondere erwünscht, die Konzentration für die jeweilige Anwendung passend einstellen und an die aktuellen Bedürfnisse anpassen zu können. Bei Gemischen von Flüssigkeiten, insbesondere Chemikalien und Wasser, kann von einer "Flotte" oder "Chemieflotte" gesprochen werden.

Es ist beispielsweise bekannt, eine erste Flüssigkeit in einen Strom einer zweiten Flüssigkeit einzuleiten, etwa um bei einer Fahrzeugwaschanlage Reinigungsmittel in Wasser zu verdünnen. Dabei stellt es sich als nachteilig heraus, dass nur mit deutlicher Verzögerung zwischen verschiedenen Konzentrationen gewechselt werden kann, etwa wenn zur Wäsche verschieden stark verschmutzter Felgen verschiedene Konzentrationen zugeführt werden sollen. Dies ist beispielsweise dadurch bedingt, dass sich in den Leitungen und sonstigen Komponenten des Systems das zuletzt verwendete Gemisch befindet und zunächst aus der Leitung herausgespült werden muss, bevor ein anderes Gemisch bereitgestellt werden kann.

Zudem ist die Leistung von Pumpen zum Einspeisen von konzentriertem Reinigungsmittel in einen Wasserstrom oft begrenzt. Um hohe Konzentrationen in dem resultierenden Gemisch zu erreichen, muss das Mittel jedoch mit hoher Flussrate eingespeist werden. Es müssen daher mehrere oder besonders große Pumpen vorgesehen werden, was sich ungünstig auf die Kosten eines solchen Systems auswirkt. Es können z. B. pneumatische Kolbenpumpen verwendet werden, bei denen ein Volumen pro Kolbenhub mechanisch eingestellt werden kann. Diese Lösungen erweisen sich jedoch als zu unflexibel, wenn variable Volumina dosiert werden sollen.

Die DE 10 2011 0036 15 A1 beschreibt ein Verfahren und eine Vorrichtung zur Messung eines Volumenstroms einer in einen Behälter einströmenden Flüssigkeit und/oder eines in den Behälter eingeströmten Volumens der Flüssigkeit, mit der bzw. mit dem in mikrofluidischen Systemen ein hohes Maß an Automatisierung erzielbar ist, bei dem vor dem Einströmen der Flüssigkeit in einem vorgegebenen Ausgangsvolumen im Behälter ein Gas unter einem Ausgangsdruck eingeschlossen wird, die anschließend in den Behälter einströmende Flüssigkeit das eingeschlossene Gas auf vom Volumen der eingeströmten Flüssigkeit abhängiges Gasvolumen komprimiert, und einen vom eingeströmten Volumen und vom einströmenden Volumenstrom abhängigen Anstieg des Gasdrucks des Gases im Behälter gegenüber dem Ausgangsdruck bewirkt, der Gasdruck im Behälter als Funktion der Zeit gemessen wird, und das bis zur einer Zeit eingeströmte Volumen und/oder der zur Zeit einströmende Volumenstrom anhand des gemessenen Gasdrucks bestimmt wird.

In der WO02/05047 A1 ist ein Verfahren zum Reinigen und/oder Desinfizieren von harten Oberflächen mit einem wässrigen, Reinigungs- und/oder Desinfektionsmittel enthaltenden Schaum beschrieben. Der Schaum wird durch Mischen von Wasser, Luft und einem konzentrierten Reinigungs- und/oder Desinfektionsmittel in einer Mischeinheit erzeugt, wobei man die Konzentration des Reinigungs- und/oder Desinfektionsmittels in diesem Schaum, bezogen auf das eingesetzte Wasser, erfasst und/oder überwacht. Man misst kontinuierlich den Verbrauch an konzentriertem Reinigungs- und/oder Desinfektionsmittel pro Zeiteinheit und ermittelt daraus und aus dem Wasserverbrauch pro Zeiteinheit die Konzentration des Reinigungs- und/oder Desinfektionsmittels im Schaum. Dadurch ist eine kontinuierliche, einfache, schnelle und fehlerfreie Erfassung und Überwachung der Konzentration des Reinigungs- und/oder Desinfektionsmittels im Reinigungs- bzw. Desinfektions-Schaum möglich.

Es ist die Aufgabe der vorliegenden Erfindung, eine Vorrichtung und ein Verfahren der eingangs genannten Art bereitzustellen, durch welche Mischungsverhältnisse in einem besonders breiten Bereich schnell variiert werden können und ein besonders einfacher Aufbau ermöglicht wird.

Diese Aufgabe wird durch eine Vorrichtung mit den Merkmalen des Anspruchs 1 und ein Verfahren mit den Merkmalen des Anspruchs 10 gelöst. Vorteilhafte Ausgestaltungen und Weiterbildungen ergeben sich aus den abhängigen Ansprüchen.

Bei der Flüssigkeitsausstoßvorrichtung der eingangs genannten Art ist das Vorratsvolumen gasdicht abgeschlossen, sodass es beim Einleiten der ersten und/oder zweiten Flüssigkeit zu einer Erhöhung eines Gasinnendrucks in dem Vorratsvolumen kommt, dass die Flüssigkeitsausstoßvorrichtung eine Erfassungseinheit zum Erfassen des zugeleiteten Volumens der zweiten Flüssigkeit in das Vorratsvolumen und des Gasinnendrucks in dem Vorratsvolumen umfasst und dass eine mit der Erfassungseinheit und der Zuführungseinheit gekoppelte Steuereinheit das Zuführen der zweiten Flüssigkeit anhand des erfassten zugeleiteten Volumens der zweiten Flüssigkeit und des Gasinnendrucks so steuert, dass ein vorgegebenes Mischungsverhältnis der ersten und zweiten Flüssigkeit in dem Vorratsvolumen erreicht wird.

Dadurch kann vorteilhafterweise die in das Vorratsvolumen eingeleitete Flüssigkeitsmenge überwacht werden, ohne dass hierzu zusätzliche Maßnahmen vorgesehen sein müssten. Insbesondere kann auf besondere zusätzliche Mittel zur Messung des Volumens der eingeleiteten ersten Flüssigkeit oder zu deren Dosierung verzichtet werden. Die erste Flüssigkeit, zum Beispiel Wasser, kann aus einer Leitung zugeführt werden, ohne dabei den Druck und die genaue Flussrate exakt zu messen oder zu kontrollieren. Stattdessen wird das Volumen der eingeleiteten Flüssigkeit anhand des Drucks bestimmt, der beim Einleiten der ersten und/oder zweiten Flüssigkeit in das gasdicht abgeschlossene Vorratsvolumen aufgebaut wird. Dies ist insbesondere dadurch bedingt, dass in dem Vorratsvolumen ein Gas vorhanden ist, das im Gegensatz zur eingeleiteten Flüssigkeit kompressibel ist. Beispielsweise kann das Gas, insbesondere Luft, beim Entnehmen der Flüssigkeit aus dem Vorratsvolumen und/oder bei einer Belüftung des Systems in dieses eindringen. Typischerweise nimmt das komprimierte Gas 1/2 bis 1/8 des Gesamtvolumens ein.

Dabei ist das Vorratsvolumen gasdicht abgeschlossen, sodass es beim Einleiten von Flüssigkeit zu einer Erhöhung eines Gasinnendrucks in dem Vorratsvolumen kommt. Das Vorratsvolumen kann dazu gasdicht verschließbar sein, etwa mittels eines Verschlusses oder eines Ventils. Der erfasste Gasinnendruck in dem Vorratsvolumen entspricht insbesondere einem Druck, der zum Einleiten der zweiten Flüssigkeit überwunden werden muss. Der Wert des eingeleiteten Volumens der ersten und zweiten Flüssigkeit wird anhand des erfassten Gasinnendrucks des Vorratsvolumens bestimmt, wobei ausgenutzt wird, dass der Gasinnendruck in dem gasdichten Vorratsvolumen mit dem zunehmenden Volumen der eingeleiteten Flüssigkeit zunimmt.

Bei einer Ausbildung der Erfindung ist die Steuereinheit dazu eingerichtet, anhand des erfassten Gasinnendrucks und des eingeleiteten Volumens der zweiten Flüssigkeit ein aktuelles Mischungsverhältnis der Flüssigkeit in dem Vorratsvolumen zu bestimmen. Alternativ oder zusätzlich wird das Flüssigkeitsvolumen in dem Vorratsvolumen und/oder ein Volumen der noch einzuleitenden zweiten Flüssigkeit bestimmt. Dadurch kann das Mischungsverhältnis vorteilhafterweise genau überwacht und gegebenenfalls schnell angepasst werden.

Es kann beispielsweise vorgesehen sein, dass der Gasinnendruck des Vorratsvolumens periodisch innerhalb bestimmter Zeitabstände erfasst und anhand dieses Drucks das Volumen der im Vorratsvolumen befindlichen Flüssigkeitsmenge bestimmt wird. Das aktuelle Mischungsverhältnis kann insbesondere anhand des erfassten gesamten Flüssigkeitsvolumens und eines anhand des Durchflusses gemessenen zugeführten Volumens der zweiten Flüssigkeit bestimmt werden. Mit diesem Verfahren kann das aktuelle Mischungsverhältnis bestimmt werden, ohne dass dazu das Volumen für beide Flüssigkeiten einzeln gemessen werden muss.

Die Zuführungseinheit für die zweite Flüssigkeit kann auf an sich bekannte Weise ausgebildet sein. Es können mehrere Zuführungseinheiten vorgesehen sein, insbesondere für mehrere Flüssigkeiten. Insbesondere kann auch vorgesehen sein, dass die erste und zweite Flüssigkeit nacheinander, das heißt sequenziell, zugeführt werden, wobei insbesondere eine gemeinsame Zuführungseinheit verwendet werden kann. Ferner können die erste und zweite Flüssigkeit bei einer Ausführung gleichzeitig mittels einer gemeinsamen Zuführungseinheit zugeführt werden.

Bei einer weiteren Ausbildung umfasst die Zuführungseinheit eine elektrische Dosierpumpe, insbesondere mit einem elektromagnetisch angetriebenen Kolben. Die Zuführung erfolgt dadurch vorteilhafterweise besonders präzise und ist schnell steuerbar, etwa um den Fluss und das Volumen der zugeführten Flüssigkeit schnell und flexibel anpassen zu können.

Durch die elektrische Dosierpumpe kann die zweite Flüssigkeit zugeführt werden; in weiteren Ausführungen kann ebenfalls die erste Flüssigkeit durch sie zugeführt werden oder es kann eine weitere elektrische Dosierpumpe zum Zuführen der ersten Flüssigkeit vorgesehen sein.

Die elektrische Dosierpumpe ist insbesondere so ausgebildet, dass das zugeführte Volumen zur Laufzeit steuerbar ist, das heißt, das gesamte zugeführte Volumen und die Rate der Zuführung können während der Zuführung angepasst werden. Dies unterscheidet die elektrische Dosierpumpe von Alternativen, wie einfachen pneumatischen Kolbenpumpen, die ein fest vorgegebenes oder zumindest vorher einzustellendes Volumen vollständig ausstoßen. In anderen Ausführungsbeispielen können auch andere Pumpentypen verwendet werden.

Die Druckerfassung kann auf an sich bekannte Weise erfolgen, wobei verschiedene bekannte Drucksensoren eingesetzt werden können, um den Gasinnendruck in dem Vorratsvolumen direkt zu messen. Der Druck kann auch beim Einleiten der ersten Flüssigkeit in das Vorratsvolumen gemessen werden.

Erfindungsgemäß umfasst die Zuführungseinheit ein Druckerfassungselement zum Erfassen des Gasinnendrucks. Das Druckerfassungselement ist insbesondere mit der Erfassungseinheit gekoppelt. Dadurch ist es vorteilhafterweise möglich, den Gasinnendruck in dem Vorratsvolumen beim Einleiten der zweiten Flüssigkeit mithilfe der Zuführungseinheit zu bestimmen. Insbesondere wird dabei bestimmt, welcher Gegendruck des Vorratsvolumens überwunden werden muss, um die zweite Flüssigkeit zuzuführen. Insbesondere wird die Kraft gemessen, gegen welche die elektrische Dosierpumpe arbeitet. Anhand einer solchen Messung kann der Druck in dem Vorratsvolumen bestimmt werden. Das Druckerfassungselement kann ferner von der Erfassungseinheit umfasst sein oder die Erfassungseinheit kann damit gekoppelt sein und den Gasinnendruck mittels des Druckerfassungselements erfassen.

Erfindungsgemäß ist das Druckerfassungselement dazu eingerichtet, eine Leistungsaufnahme der Zuführungseinheit zu erfassen und anhand der Leistungsaufnahme den Gasinnendruck zu erfassen. Insbesondere wird zur Zuführung der zweiten Flüssigkeit bei einer bestimmten Zuführrate eine umso größere Leistung benötigt, je größer der Gasinnendruck ist. Die Zuführungseinheit umfasst dabei insbesondere eine elektrische Dosierpumpe. Dadurch kann vorteilhafterweise der Gasinnendruck als Gegendruck beim Zuführen der zweiten und/oder ersten Flüssigkeit auf indirektem Wege bestimmt werden, ohne dass dazu eine gesonderte Vorrichtung, etwa ein Sensor, zum Beispiel in dem Vorratsvolumen angeordnet werden muss. Als Druckerfassungselement kann zum Beispiel ein Bauteil verwendet werden, das die Leistungsaufnahme oder einen bestimmten Teil der gesamten Leistungsaufnahme der Zuführungseinheit erfasst und mit der Erfassungseinheit so gekoppelt ist, dass diese anhand der erfassten Daten den Gasinnendruck bestimmen kann. Ein solches Bauteil kann etwa in die Zuführungseinheit integriert sein.

Die Leistungsaufnahme der Pumpe ist proportional zum Produkt des Volumenstroms und der Druckdifferenz, gegen welche die Pumpe arbeitet. Der Volumenstrom ist konstant. Er ist üblicherweise vorgegeben, d. h. ein Sollwert für einen Regelkreis. In der Pumpe wird z. B. die Spannung so geregelt, dass ein entsprechender Volumenstrom ausgestoßen wird. Hierfür wird z. B. der Hub eines Hubmagneten erfasst. Wird die Spannung in der Pumpe erhöht, erhöht sich der Strom und damit die Leistung der Pumpe. Aus der Leistung kann somit der Gegendruck ermittelt werden, gegen welche die Pumpe arbeitet. Dieser Gegendruck kann dann von der Pumpe ausgegeben werden.

Im Betrieb wird z. B. für den Volumenstrom ein Sollwert eingegeben. Die Regelung der Pumpe gibt dann den Gegendruck aus. Dieser Gegendruck enthält noch den Druck des Fluids beim Einspeisen des Fluids und Reibungsverluste in der Leitung. Diese Drücke sind jedoch konstant, so dass sich aus den Druckdifferenzen der Gasinnendruck im Vorratsvolumen ergibt.

Die Ermittlung des Gasinnendrucks mittels der Leistungsaufnahme der Pumpe hat den Vorteil, dass ein separater Drucksensor nicht erforderlich ist. Des Weiteren gibt es keine zusätzlichen Teile, die mit der zweiten Flüssigkeit in Berührung kommen. Außerdem ergeben sich keine zusätzlichen Dichtflächen und es befinden sich keine elektronischen Bauteile in der Nähe der zweiten Flüssigkeit, bei der es sich um eine Chemikalie handeln kann.

Die Flüssigkeitsausstoßvorrichtung weist gemäß einer Ausgestaltung der Erfindung eine Entnahmeeinrichtung zum Entnehmen, d h. insbesondere Ausstoßen, der Flüssigkeit auf, die sich in dem Vorratsvolumen befindet.

Bei einer Ausbildung ist die Steuervorrichtung mit der Entnahmeeinrichtung gekoppelt und dazu eingerichtet, beim Erreichen eines vorgegebenen Flüssigkeitsvolumens und des vorgegebenen Mischungsverhältnisses einen Ausstoßvorgang mittels der Entnahmeeinrichtung zu starten. Bei dem Ausstoßvorgang wird die in dem Vorratsvolumen befindliche Flüssigkeit mit einer Ausstoßrate ausgestoßen, insbesondere durch ein mit der Entnahmeleitung gekoppeltes Ausstoßelement, beispielsweise eine Düse.

Der Ausstoßvorgang kann auf an sich bekannte Weise erfolgen, beispielsweise mittels einer Pumpe, die Flüssigkeit aus dem Vorratsvolumen absaugt und an eine Entnahmevorrichtung abgibt. Der Ausstoßvorgang kann ein Öffnen der Absperreinrichtung, insbesondere eines Absperrventils, der Entnahmeleitung und/oder ein Schließen weiterer Ventile umfassen, sowie das Starten einer Pumpe zum Ausstoßen des Gemischs. Zudem kann vorgesehen sein, dass die Flüssigkeit durch die Entnahmeleitung aus dem Vorratsvolumen herausgedrückt wird. Die Entnahmeeinrichtung kann daher beispielsweise als Pumpe ausgebildet sein, durch die Flüssigkeit aus dem Vorratsvolumen angesaugt und ausgestoßen werden kann. Sie kann alternativ als Kompressor ausgebildet sein, der in dem Vorratsvolumen einen Druck aufbaut, durch den die darin enthalten Flüssigkeit herausgedrückt wird.

Das Ausstoßelement kann auf an sich bekannte Weise gebildet sein und etwa eine Düse umfassen. Durch das Ausstoßelement kann ein Flüssigkeitsstrahl gebildet, geformt und in eine bestimmte Richtung oder in bestimmte Richtungen gelenkt werden. Ferner kann das Ausstoßelement eine Druckregulierung umfassen, durch die etwa ein Druck der ausgestoßenen Flüssigkeit geregelt werden kann.

Die in das Vorratsvolumen eingeleitete Flüssigkeit kann in bestimmten Portionen ausgestoßen werden, insbesondere nach dem Einleiten einer bestimmten Flüssigkeitsmenge, beispielsweise um die Flüssigkeit auf eine Oberfläche aufzutragen. Es wird erst das gewünschte Mischungsverhältnis hergestellt und dann die Flüssigkeit ausgestoßen, sodass ein definierter Ausstoß, beispielsweise einer bestimmten Reinigungsmittelkonzentration, sichergestellt wird.

Insbesondere wird dabei die Zuführung der ersten Flüssigkeit nicht oder nur grob geregelt, etwa durch An- und Ausschalten der Zuführung oder durch Öffnen und Schließen eines Ventils. Dagegen wird insbesondere die zweite Zuführrate mittels eines Ventils, einer Einrichtung zum Drosseln der Zuführungsleitung für die erste Flüssigkeit oder mittels Ansteuerung einer Zuführungseinheit für die zweite Flüssigkeit geregelt.

Bei weiteren Ausbildungen der Erfindung wird alternativ oder zusätzlich die erste Zufuhrrate so geregelt, dass das vorgegebene Mischungsverhältnis der ersten und zweiten Flüssigkeit im Vorratsvolumen erreicht wird.

Der portionsweise Ausstoß der Flüssigkeit bei der Erfindung, wobei auch von einer *"batchweisen"* Zuführung oder einer Zuführung in *"Batches"* gesprochen werden kann, steht im Gegensatz zu bekannten Vorrichtungen, bei denen die Flüssigkeiten in einen kontinuierlichen Strom gleichzeitig eingeleitet und gemischt werden oder vorgemischt vorgehalten werden. Zum Beispiel wird ein konzentriertes Reinigungsmittel in einen fortlaufenden Wasserstrom dosiert, beziehungsweise "eingeimpft". Stattdessen wird bei der Erfindung das Gemisch nicht als kontinuierlich gemischter und ausgestoßener Flüssigkeitsstrom bereitgestellt, bei dem die zweite Flüssigkeit laufend in den Strom der ersten Flüssigkeit eindosiert wird, sondern die erste und die zweite Flüssigkeit werden zunächst in einem gewünschten Verhältnis in das Vorratsvolumen eingeleitet. Die Entnahme erfolgt erst anschließend, insbesondere nach dem Erreichen eines bestimmten Zielvolumens und eines bestimmten Mischungsverhältnisses.

Dadurch können praktisch beliebige Mischungsverhältnisse erreicht werden, insbesondere auch solche, bei denen die zweite Flüssigkeit in besonders hoher Konzentration vorhanden ist. Beispielsweise kann ein Mischungsverhältnis von 1% bis 60% der zweiten Flüssigkeit, bevorzugt 10% bis 50% der zweiten Flüssigkeit im gesamten Flüssigkeitsvolumen vorgegeben sein. Bei der Zuführung in einen Strom der ersten Flüssigkeit müsste die zweite Flüssigkeit dazu mit einer sehr hohen Zuführungsrate eingeleitet werden, was eine entsprechend starke Pumpe erfordert. Dieses Problem tritt vor allem dann auf, wenn die Entnahmerate besonders hoch ist, das heißt, wenn ein großes Volumen des Gemischs in kurzer Zeit bereitgestellt werden muss. Bei der erfindungsgemäßen Vorrichtung reichen dagegen kleiner dimensionierte Pumpen aus, insbesondere zum Zuführen der zweiten Flüssigkeit, da die Einleitung in das Vorratsvolumen mit geringerer Geschwindigkeit erfolgen kann, als es für die kontinuierliche Ausgabe notwendig wäre.

Die Zuführungsleitung und die Entnahmeleitung können unterschiedlich auf an sich bekannte Weisen ausgebildet sein, wobei zum Zuführen der zweiten Flüssigkeit eine zweite stromaufwärts mit dem Vorratsvolumen gekoppelte Zuführungsleitung vorgesehen sein kann. Sie können insbesondere Ventile umfassen, die einen Fluss von Flüssigkeiten in eine nicht vorgesehene Richtung unterbinden, beispielsweise Rückschlagventile, Quetschventile, elektromagnetische Ventile oder Nadelventile. Insbesondere können auch mehrere Zuführungsleitungen und/oder Entnahmeleitungen vorgesehen sein. Beispielsweise können verschiedene Zuführungsleitungen für die erste und zweite Flüssigkeit vorgesehen sein.

Bei einer weiteren Ausbildung ist die Entnahmeeinrichtung so ausgebildet, dass die Entnahmerate größer als die Summe der maximal erreichbaren ersten und zweiten Zuführrate ist. Die Entnahmerate kann dabei zeitlich veränderlich sein und zum Beispiel die maximale Ausstoßrate bezeichnen. Dadurch kann vorteilhafterweise der Ausstoß schneller beziehungsweise mit höherem Druck erfolgen als die Zuführung der Flüssigkeiten in das Vorratsvolumen. Dies wird dadurch ermöglicht, dass das vorgegebene Gesamtvolumen zunächst in das Vorratsvolumen eingeleitet und erst dann ausgestoßen wird. Die erreichbare Ausstoßgeschwindigkeit ist daher unabhängig von der maximalen Einleitgeschwindigkeit.

Bei einer Ausbildung ist die erste Flüssigkeit mit einem konstanten Volumenstrom einleitbar. Insbesondere ist die erste Zuführrate im Wesentlichen konstant. Unter einem konstanten Volumenstrom wird insbesondere ein Volumenstrom verstanden, der weniger als $\pm$ 5 % von einem Soll-Volumenstrom abweicht. Die Vorrichtung kann dadurch vorteilhafterweise besonders einfach ausgebildet werden.

Beispielsweise kann als erste Flüssigkeit Wasser aus einer Leitung in das Vorratsvolumen eingeleitet werden, wobei während des Zuführens lediglich ein Ventil geöffnet oder geschlossen werden kann und keine weitere Steuerung der ersten Zuführrate stattfindet. Insbesondere wird während des Zuführens der ersten Flüssigkeit die Durchflussmenge nicht direkt gemessen, sondern sie kann lediglich anhand der gesamten in das Vorratsvolumen eingeleiteten Flüssigkeitsmenge und anhand einer Messung der Menge der eingeleiteten zweiten Flüssigkeit bestimmt werden. Indem bei der Vorrichtung die eingeleitete Flüssigkeitsmenge im Vorratsvolumen erfasst wird, kann die Zuführung der zweiten Flüssigkeit so angepasst und geregelt werden, dass ein bestimmtes Mischungsverhältnis bei einer vorgegebenen Flüssigkeitsmenge in dem Vorratsvolumen erreicht wird.

Bei der Erfindung werden die erste und die zweite Flüssigkeit so in das Vorratsvolumen eingeleitet, dass ein vorgegebenes Mischungsverhältnis erreicht wird. Ferner wird ein vorgegebenes Zielvolumen des Gemischs erreicht. Durch die Erfassung des Drucks, insbesondere während des Einleitens der zweiten Flüssigkeit, kann insbesondere laufend nachjustiert werden, mit welcher Geschwindigkeit und/oder welchem Druck die erste und/oder zweite Flüssigkeit eingeleitet wird. Zur Steuerung können die aktuellen und als Zielgrößen vorgegebenen Werte für das Zielvolumen und das Mischungsverhältnis verwendet werden.

Ferner kann das in das Vorratsvolumen eingeleitete Volumen der ersten oder zweiten Flüssigkeit und/oder das gesamte Volumen des bereits eingeleiteten Gemischs erfasst werden. Die Erfassungseinheit kann auf an sich bekannte Weise ausgebildet sein, das gesamte Flüssigkeitsvolumen im Vorratsvolumen zu erfassen.

Die Flüssigkeitsausstoßvorrichtung weist gemäß einer Ausgestaltung der Erfindung einen Durchflusssensor auf, mit dem das eingeleitete Volumen der zweiten Flüssigkeit erfasst werden kann.

Bei einer weiteren Ausbildung ist der Durchflusssensor zum Erfassen des eingeleiteten Volumens der zweiten Flüssigkeit mit der Erfassungseinheit gekoppelt oder von ihr umfasst. Auf diese Weise kann vorteilhafterweise das eingeleitete Volumen direkt und besonders genau bestimmt werden. Ferner kann auch das eingeleitete Volumen der ersten Flüssigkeit mittels eines Durchflusssensors erfasst werden. Eine solche Messung kann jedoch zusätzliche Sensoren und Einrichtungen erfordern.

Der Durchflusssensor ist auf an sich bekannte Weise ausgebildet und kann beispielsweise in einer Zuführungsleitung zum Einleiten der zweiten Flüssigkeit angeordnet sein. Ferner kann die Zuführungseinheit einen Durchflusssensor oder eine entsprechende Einrichtung zum Erfassen des durchfließenden Volumens verwenden, wobei der Durchfluss insbesondere direkt anhand der Tätigkeit der Zuführungseinheit bestimmt wird, etwa anhand der Frequenz, mit der ein bestimmtes Kolbenvolumen eingeleitet wird. Eine solche Bestimmung des Volumens ist insbesondere bei einer Kolbenpumpe besonders einfach vorzunehmen. Durch Integration beziehungsweise Summieren des Durchflusses über die Zeit kann bestimmt werden, welches Volumen der zweiten Flüssigkeit in das Vorratsvolumen eingeleitet wurde. Ferner kann auf analoge Weise das eingeleitete Volumen der ersten Flüssigkeit erfasst werden.

Die Erfassungseinheit kann alternativ oder zusätzlich verschiedene andere Sensoren oder Einrichtungen zur Detektion des gesamten eingeleiteten Flüssigkeitsvolumens umfassen, beispielsweise einen Schwimmer in dem Vorratsvolumen oder eine entsprechende Einheit.

Das Mischungsverhältnis in dem Vorratsvolumen kann anhand des erfassten gesamten Flüssigkeitsvolumens und des Volumens der eingeleiteten zweiten Flüssigkeit bestimmt werden. Insbesondere wird eine Konzentration der zweiten Flüssigkeit bestimmt. In weiteren Ausführungen kann vorgesehen sein, dass mehr als zwei Flüssigkeiten eingeleitet werden und das Mischungsverhältnis als Verhältnis des Volumens der zweiten Flüssigkeit zu dem gesamten Flüssigkeitsvolumen ist.

Bei einer Ausführung werden das vorgegebene Flüssigkeitsvolumen und/oder das vorgegebene Mischungsverhältnis von einem Nutzer erfasst, etwa mittels einer Eingabe. Diese kann beispielweise eine nummerische Eingabe umfassen oder es kann zwischen verschiedenen Einstellungen ausgewählt werden, denen jeweils ein Flüssigkeitsvolumen und ein Mischungsverhältnis zugeordnet sind. Beispielsweise kann es sich um verschiedene Programme der Fahrzeugwaschanlage handeln.

Das Vorratsvolumen kann auf verschiedene an sich bekannte Weisen ausgebildet sein. Es umfasst einen Hohlraum, der flüssigkeits- und insbesondere gasdicht gegenüber dem Außenraum geschlossen werden kann. Hierzu ist insbesondere vorgesehen, dass Öffnungen des Vorratsvolumens, insbesondere zum Einleiten oder Entnehmen von Flüssigkeiten und Gasen, durch Ventile gasdicht abgesperrt werden können. Alternativ kann das Vorratsvolumen offen ausgebildet sein, wobei insbesondere ein Gasaustausch mit anderen Komponenten oder einem Außenraum möglich ist, solange keine Absperrung gegen den Gasaustausch erfolgt, etwa mittels eines Deckels oder Ventils. Wenn die Flüssigkeit ein Felgenreiniger ist, fasst das Vorratsvolumen bevorzugt 50 ml bis 300 ml, besonders bevorzugt 100 ml bis 150 ml. Wenn die Flüssigkeit ein Vorreiniger, zum Beispiel ein Insektenreiniger, ist, fasst das Vorratsvolumen bevorzugt 5 l bis 10 l.

Bei einer weiteren Ausbildung ist das Vorratsvolumen von einer Flüssigkeitsleitung gebildet. Eine solche Leitung kann etwa durch einen Schlauch gebildet sein und ist durch eine längliche Ausdehnung und einen im Wesentlichen konstanten, im Vergleich zur Länge der Leitung kleinen Querschnitt gekennzeichnet. Insbesondere beträgt die Länge zumindest das Hundertfache, bevorzugt zumindest das Fünfhundertfache des Leitungsdurchmessers. Die Flüssigkeitsleitung weist ein Ende auf, das mit einer Entnahmevorrichtung verbunden ist, etwa einem Leitungssystem zur Verteilung von Flüssigkeiten und/oder ein Ausstoßelement, etwa einer Düse. In diesem Fall ist insbesondere die Flüssigkeitsleitung mit einer Druckblase, zum Beispiel eine Membrandruckblase oder einem Windkessel, versehen. Dadurch wird vorteilhafterweise ein Hohlraum als Vorratsvolumen genutzt, der bei typischen Einrichtungen bereits vorhanden ist, um das Gemisch zu einer Entnahmevorrichtung zu leiten. Bestehende Anlagen können somit besonders leicht angepasst oder umgebaut werden. Öffnungen zum Einleiten und/oder Entnehmen von Flüssigkeiten aus der Flüssigkeitsleitung können etwa mittels Bohrungen in der Leitungswand angeordnet sein.

Gemäß einer anderen Ausgestaltung, bei der eine Druckblase nur optional verwendet wird, kann die Flüssigkeitsleitung, welche das Vorratsvolumen bildet, wie folgt gefüllt werden: Zunächst ist die Flüssigkeitsleitung nur mit Gas gefüllt. Der Druck in der Flüssigkeitsleitung ist Atmosphärendruck. Das Absperrventil wird nun geschlossen und es werden die Flüssigkeiten zudosiert, und zwar gegen den Gasdruck im Inneren der Flüssigkeitsleitung, der sich erhöht, da das System gasdicht und druckdicht geschlossen ist. Die Geometrie der Flüssigkeitsleitung ist insbesondere so ausgebildet, dass das in der Flüssigkeitsleitung befindliche Gas an der zudosierten Flüssigkeit vorbeiströmen kann, so dass sich das Gas im oberen Teil der Flüssigkeitsleitung sammelt. Beim Ausstoßvorgang mittels der Entnahmeeinrichtung kann dort Austreibgas mit einem Druck einströmen, welcher höher ist als der Druck in dem komprimierten Gas im Vorratsvolumen, sodass hierdurch die Flüssigkeit aus dem Vorratsvolumen bei geöffnetem Absperrventil ausgetrieben wird.

Bei einer Weiterbildung umfasst die erste und/oder zweite Flüssigkeit ein Reinigungsmittel. Die Vorrichtung kann so vorteilhafterweise dazu genutzt werden, das Reinigungsmittel je nach Bedarf zu dosieren. Es kann sich beispielsweise um ein Mittel zur Reinigung von Felgen eines Fahrzeugs handeln. Die Vorrichtung erlaubt es, dieses Mittel besonders flexibel zu dosieren, beispielsweise um Felgen entsprechend ihrem jeweiligen Verschmutzungsgrad zu behandeln und zu hohe oder zu niedrige Konzentrationen zu vermeiden.

Bei einer Weiterbildung umfasst die Entnahmeeinrichtung eine Gaszuführeinheit und die Steuereinheit ist dazu eingerichtet, beim Ausstoßvorgang die Absperreinrichtung zu öffnen und durch die Gaszuführeinheit ein Austreibgas in das Vorratsvolumen so einzuleiten, dass das Gemisch mit der ersten und zweiten Flüssigkeit aus dem Vorratsvolumen ausgetrieben wird. Die Gaszuführeinheit kann insbesondere einen Anschluss für Druckluft oder einen Kompressor umfassen. Damit kann vorteilhafterweise das Vorratsvolumen so mit Gasdruck beaufschlagt werden, dass die darin befindliche Flüssigkeit, insbesondere das dort hergestellte Gemisch, besonders schnell und vollständig ausgetrieben wird. Bei einer weiteren Ausbildung kann das Austreibgas eingeleitet und so mit Druck beaufschlagt werden, dass die Absperreinrichtung durch diesen Druck geöffnet wird.

Voraussetzung für den Ausstoß mittels eines Austreibgases ist, dass das Vorratsvolumen gasdicht abgeschlossen ist und der aufgebaute Druck lediglich durch die Entnahmeöffnung unter gleichzeitigem Ausstoß des Flüssigkeitsgemischs abgeleitet werden kann. Der gasdichte Abschluss des Vorratsvolumens muss insbesondere dem Druck des eingeleiteten Austreibgases standhalten, wobei gegebenenfalls ein Überdruckventil vorgesehen ist. Dabei kann vorgesehen sein, dass ein Gas mit einem Druck von 4 bis 8 bar, bevorzugt 6 bar, in das Vorratsvolumen eingeleitet wird. Hierdurch und durch eine geeignete Steuerung des zugeführten Drucks kann erreicht werden, dass das Gemisch der Flüssigkeiten mit einem definierten Druck aus dem Vorratsvolumen ausgestoßen wird, etwa um ein gleichmäßiges Sprühbild und eine homogene Benetzung der Oberfläche zu erreichen.

Im Unterschied hierzu erfolgt üblicherweise die Entnahme von Flüssigkeiten mittels einer Pumpe und das Austreiben mittels eines Gases ist nur bekannt, um eine Entnahmevorrichtung, etwa Spritzdüsen bzw. Rohre, zu entleeren und/oder ein Nachtropfen zu verhindern. Es wird in diesem Fall insbesondere Restflüssigkeit ausgetrieben. Dagegen kann bei der Vorrichtung gemäß der Erfindung das gesamte Ausstoßen des Gemischs mittels Luftdruck angetrieben werden.

Beim Ausstoßen des Flüssigkeitsgemischs kann vorgesehen sein, dass die Absperreinrichtung so angesteuert wird, dass es die Entnahmeöffnung lediglich zur Entnahme beziehungsweise zum Ausstoßen der Flüssigkeit freigibt. Die Absperreinrichtung kann ferner so eingerichtet sein, dass es beim Überschreiten eines bestimmten Drucks im Vorratsvolumen öffnet, etwa als Überdruckventil, oder es kann eine Ansteuerung zum aktiven Öffnen des Ventils vorgesehen sein. Zudem können Ventile bei weiteren Öffnungen, insbesondere bei einer Zuleitungsöffnung, vorgesehen sein, die als Rückschlagventile fungieren und somit verhindern, dass ein Teil des Drucks über die Zuleitungsöffnungen abgeleitet wird.

Durch das Austreiben des Gemischs mittels eines mit Druck beaufschlagten Gases kann das Vorratsvolumen ferner vollständig geleert werden, zudem kann ein Nachtropfen verhindert werden. Insbesondere ist das Vorratsvolumen nach dem Austreiben des Flüssigkeitsgemischs im Wesentlichen nur noch mit dem Gas, etwa Luft, gefüllt. Wenn nun erneut die erste und zweite Flüssigkeit zugeführt werden, wird das Mischungsverhältnis nicht wesentlich durch Rückstände des zuvor entnommenen Gemischs verfälscht. Zudem kann vermieden werden, dass das Vorratsvolumen, eine Entnahmeleitung und/oder Entnahmevorrichtungen länger als notwendig mit aggressiven Flüssigkeiten gefüllt sind oder mit diesen in Kontakt stehen.

Bei einer weiteren Ausbildung ist die erste und/oder zweite Zuführungsleitung in einem oberen Bereich mit dem Vorratsvolumen gekoppelt. Der obere Bereich ist dabei so gebildet, dass er auch bei Einleitung einer maximalen Flüssigkeitsmenge in das Vorratsvolumen nicht unter dem Flüssigkeitsspiegel angeordnet ist. Dies erlaubt es vorteilhafterweise, dass die erste und/oder zweite Flüssigkeit so eingeleitet wird, dass der dabei wirkende Gegendruck dem Gasinnendruck entspricht. Zum Beispiel wird zumindest die zweite Flüssigkeit gegen den Druck eines in dem Vorratsvolumen befindlichen Gases eingeleitet.

Der "obere Bereich" ist daher durch die Wirkung der Schwerkraft so definiert, dass in einer Flüssigkeit aufsteigende Gase sich in seiner Richtung bewegen und im oberen Bereich ansammeln. Umgekehrt sammeln sich Flüssigkeiten in einem unteren Bereich des Vorratsvolumens.

Ferner kann vorgesehen sein, dass die Entnahmeleitung im unteren Bereich mit dem Vorratsvolumen gekoppelt ist, der sich insbesondere bereits bei einer geringen eingeleiteten Flüssigkeitsmenge unter dem Flüssigkeitsspiegel befindet. Dadurch kann die Entnahme durch die Entnahmeleitung besonders effizient erfolgen. Der Anschluss der Entnahmeleitung kann etwa am tiefsten Punkt des Vorratsvolumens angeordnet sein, sodass er beim Erreichen des Zielvolumens des Gemischs im Wesentlichen bis zum Abschluss der Entnahme vollständig von dem Gemisch bedeckt ist und diese durch sie entnommen werden kann. Insbesondere können mehrere Zuführungsleitungen und/oder Entnahmeleitungen vorgesehen sein.

Bei einer Weiterbildung ist stromabwärts von der Absperreinrichtung eine Verzweigungsleitung zum Verteilen der ausgestoßenen Flüssigkeit auf zumindest zwei Ausstoßelemente angeordnet. Dadurch können vorteilhafterweise mehrere Ausstoßelemente mit Flüssigkeit versorgt werden. Die Verzweigungsleitung kann beispielsweise ein T-Stück oder eine Einrichtung mit mehreren Anschlüssen umfassen, woran weiter stromabwärts die Ausstoßelemente angeschlossen sind.

Bei dem erfindungsgemäßen Verfahren der eingangs genannten Art ist das Vorratsvolumen gasdicht abgeschlossen, sodass es beim Einleiten der ersten Flüssigkeit zu einer Erhöhung eines Gasinnendrucks des Vorratsvolumens kommt. Beim Einleiten der zweiten Flüssigkeit wird der Gasinnendruck des Vorratsvolumens und das zugeleitete Volumen der zweiten Flüssigkeit erfasst und das Einleiten der zweiten Flüssigkeit wird in Abhängigkeit von dem erfassten zugeleiteten Volumen der zweiten Flüssigkeit und dem erfassten Gasinnendruck in dem Vorratsvolumen gesteuert. Es wird dabei so gesteuert, dass ein vorgegebenes Mischungsverhältnis der ersten und zweiten Flüssigkeit in dem Vorratsvolumen erreicht wird. Der Gasinnendruck wird mithilfe eines Druckerfassungselements der Zuführungseinheit erfasst. Das erfindungsgemäße Verfahren ist dadurch gekennzeichnet, dass durch das Druckerfassungselement eine Leistungsaufnahme der Zuführungseinheit erfasst wird und anhand der Leistungsaufnahme der Gasinnendruck erfasst wird.

Das erfindungsgemäße Verfahren ist insbesondere ausgebildet, die vorstehend beschriebene erfindungsgemäße Vorrichtung zu betreiben. Das Verfahren weist somit dieselben Vorteile auf wie die erfindungsgemäße Vorrichtung.

Bei einer Ausbildung des erfindungsgemäßen Verfahrens wird ein aktuelles Flüssigkeitsvolumen in dem Vorratsvolumen erfasst, insbesondere anhand des Gasinnendrucks, und die Flüssigkeit wird aus dem Vorratsvolumen ausgestoßen, wenn ein vorgegebenes Flüssigkeitsvolumen in dem Vorratsvolumen erreicht wird.

Alternativ oder zusätzlich kann die Flüssigkeit aus dem Vorratsvolumen ausgestoßen werden, wenn das vorgegebene Mischungsverhältnis der ersten und zweiten Flüssigkeit im Vorratsvolumen erreicht wurde.

Dadurch kann vorteilhafterweise eine hohe Ausstoßrate erreicht werden, selbst wenn die Zuführung in das Vorratsvolumen nur mit langsameren Raten erfolgen kann. Die Entnahmerate ist hier nämlich nach dem Erreichen des vorbestimmten Flüssigkeitsvolumens unabhängig davon, mit welcher Rate die erste und/oder zweite Flüssigkeit zugeführt wurde. Insbesondere ist die Ausstoßrate höher als die maximale Zuführrate.

Bei einer weiteren Ausbildung wird die Flüssigkeit mit einer Entnahmerate ausgestoßen, die größer als die Summe der maximal erreichbaren ersten und zweiten Zuführrate ist. Dadurch kann vorteilhafterweise ein besonders schneller Ausstoß erreicht werden.

Beim Starten des Ausstoßvorgangs kann die Absperreinrichtung geöffnet und weitere Ventile, insbesondere bei der Zuleitungsöffnung, können geschlossen werden. Das Ausstoßen kann mittels einer Pumpe erfolgen oder das Gemisch in dem Vorratsvolumen kann mittels eines mit Druck beaufschlagten Austreibgases, insbesondere Luft, ausgetrieben werden.

Bei einer weiteren Ausbildung wird die aus dem Vorratsvolumen ausgestoßene Flüssigkeit durch eine stromabwärts von der Absperreinrichtung angeordnete Verzweigungsleitung auf zumindest zwei Ausstoßelemente verteilt. Dadurch können vorteilhafterweise gleichzeitig mehrere Ausstoßelemente, etwa Düsen, mit dem Flüssigkeitsgemisch aus dem Vorratsvolumen versorgt werden. Es kann vorgesehen sein, dass die Flüssigkeit so verteilt wird, dass sie durch die Ausstoßelemente mit der gleichen Ausstoßrate ausgestoßen wird. Ferner können die Ausstoßelemente so ausgebildet sein, dass durch sie die Rate des Flüssigkeitsausstoßes jeweils einstellbar oder regelbar ist.

Bei einer Weiterbildung wird die erste Flüssigkeit mit einer im Wesentlichen konstanten ersten Zuführrate, insbesondere mit konstantem Druck, zugeführt. Insbesondere wird dabei die zweite Flüssigkeit mit variablem Druck eingeleitet, der anhand des vorgegebenen Mischungsverhältnisses bestimmt und geregelt wird. Das Verfahren kann dadurch besonders einfach und mit geringem Aufwand an Steuereinheiten durchgeführt werden, da beispielsweise auf eine Einrichtung zur Änderung der ersten Zuführrate verzichtet werden kann.

Die Erfindung wird nun anhand von Ausführungsbeispielen mit Bezug zu den Zeichnungen erläutert.

Figuren 1 und 2    zeigen ein erstes Ausführungsbeispiel der erfindungsgemäßen Flüssigkeitsausstoßvorrichtung und
Figur 3    zeigt ein weiteres Ausführungsbeispiel der erfindungsgemäßen Flüssigkeitsausstoßvorrichtung.

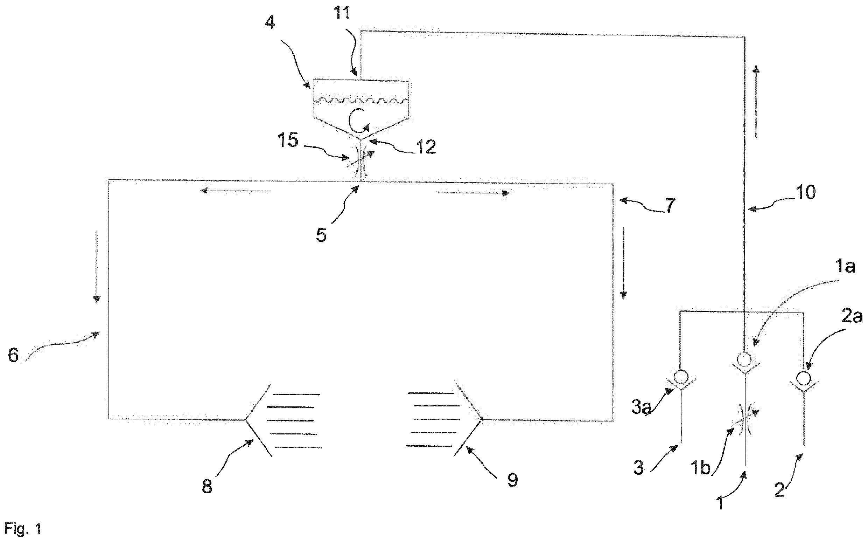

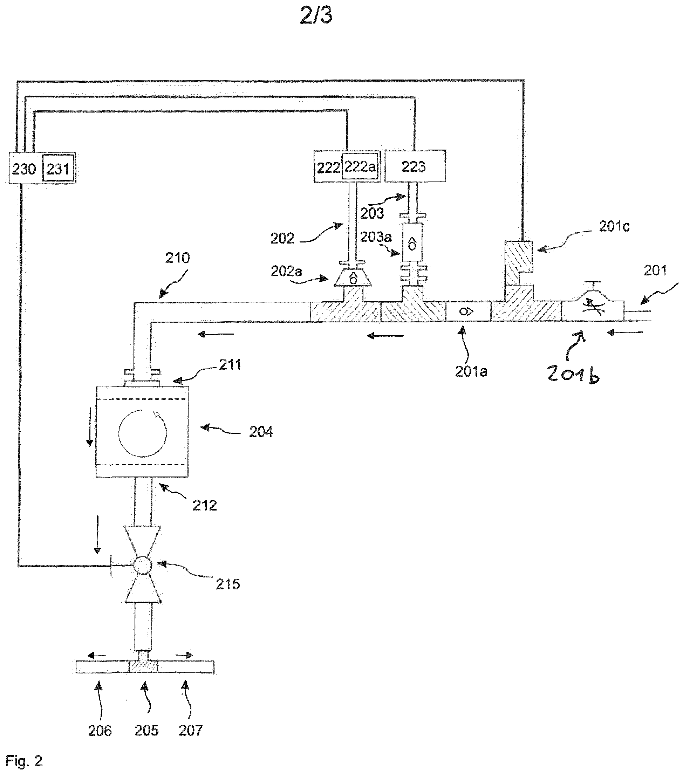

Mit Bezug zu den Figuren 1 und 2 wird ein Ausführungsbeispiel der erfindungsgemäßen Vorrichtung erläutert. Figur 2 zeigt dabei eine detailliertere Ansicht als Figur 1.

Die Vorrichtung umfasst eine Einspeiseleitung 10, 210, die an eine Zuleitungsöffnung 11, 211 eines Vorlagebehälters 4, 204 angeschlossen ist. Der Vorlagebehälter 4, 204 umfasst ferner eine Entnahmeöffnung 12, 212, an die eine Entnahmeleitung zu einem T-Stück 5, 205 angeschlossen ist, wobei in der Entnahmeleitung eine Absperreinrichtung 15, 215, ausgebildet als Absperrventil 15, 215 und insbesondere als Quetschventil, angeordnet ist. Von dem T-Stück 5, 205 verzweigt sich die Leitung in zwei Verteilerleitungen 6, 7, 206, 207, die zu Düsen 8, 9 einer Fahrzeugwaschanlage führen. Statt des T-Stücks 5, 205 kann auch eine andere Verzweigungsleitung verwendet werden. Bei dem Ausführungsbeispiel ist der Vorlagebehälter 4, 204 gasdicht abgeschlossen, wenn die Absperreinrichtung 15, 215 geschlossen ist. Ein Austausch von Fluiden kann in diesem Fall durch die Zuleitungsöffnung 11, 211 erfolgen, wobei jedoch auch die hieran angeschlossene Einspeiseleitung 10, 210 durch Schließen der angeschlossenen Ventile gasdicht abschließbar ist.

An die Einspeiseleitung 10, 210 sind eine Chemikalienzufuhr 2, 202 mit einem Rückschlagventil 2a, 202a und eine Luftzufuhr 3, 203 mit einem weiteren Rückschlagventil 3a, 203a angeschlossen. Die Chemikalienzufuhr 2, 202 ist dabei mit einer Zuführungseinheit 222, insbesondere einer elektrischen Dosierpumpe 222, verbunden, durch die eine Flüssigkeit, insbesondere ein Reinigungsmittel, zugeführt werden kann. Die elektrische Dosierpumpe 222 umfasst ein Druckerfassungselement 222a. Außerdem ist die Luftzufuhr 3, 203 mit einer Gaszuführeinheit 223 verbunden, insbesondere einem Luftkompressor oder einer anderen Quelle von Druckluft. Stromaufwärts davon sind in der Einspeiseleitung 10, 210 ein weiteres Rückschlagventil 1a, 201a, ein elektromagnetisches Wasserventil 201c, eine Drossel 1b, 201b und eine an eine Wasserversorgung angeschlossene Wasserzufuhr 1, 201 vorgesehen. Der Vorlagebehälter 4, 204 und die Einspeiseleitung 10, 210 bilden bei dem Ausführungsbeispiel also ein Vorratsvolumen, das ein bestimmtes Fluidvolumen aufnehmen kann.

Zur Steuerung der Vorrichtung ist eine Steuereinheit 230 vorgesehen, die eine Erfassungseinheit 231 umfasst und mit dem elektromagnetischen Wasserventil 201c, der elektrischen Dosierpumpe 222, der Gaszuführeinheit 223 und dem Absperrventil 15, 215 gekoppelt ist.

Es wird Wasser von der Wasserzufuhr 1, 201 mit konstantem Druck in die Einspeiseleitung 10, 210 eingespeist, wobei der Wasservolumenstrom mittels der Drossel 1b, 201b eingestellt werden kann. Die Wasserzuleitung kann ferner mittels des elektromagnetischen Wasserventils 201c an- und abgeschaltet werden. Das zugeführte Wasser passiert das Rückschlagventil 1a, 201a. Das weitere Rückschlagventil 3a, 203a verhindert ein Eindringen des Wassers in Richtung der Luftzufuhr 3, 203. Der Wasserstrom passiert ferner den Anschluss zur Chemikalienzufuhr 2, 202, wobei auch hier ein Rückschlagventil 2a, 202a verhindert, dass Wasser eindringt. Es gelangt schließlich durch die Zuleitungsöffnung 11, 211 in den Vorlagebehälter 4, 204.

Bei weiteren Ausführungsbeispielen kann zumindest ein Durchflusssensor vorgesehen sein, der zum Beispiel in der Einspeiseleitung 10, 210 angeordnet sein kann. Er kann ferner im Bereich der Wasserzufuhr 1, 201 und/oder der Chemikalienzufuhr 2, 202 angeordnet sein.

Mit Bezug zu den Figuren 1 und 2 wird ein Ausführungsbeispiel des erfindungsgemäßen Verfahrens erläutert.

Bei dem Ausführungsbeispiel des Verfahrens ist in einem Grundzustand das Absperrventil 15, 215 geschlossen, sodass der Vorlagebehälter 4, 204 bis auf die Zuleitungsöffnung 11, 211 gasdicht abgeschlossen ist. Der Vorlagebehälter 4, 204 und insbesondere auch die Einspeiseleitung 10, 210 sind im Grundzustand mit Luft gefüllt. Daher kommt es beim Einleiten von Flüssigkeit in den Vorlagebehälter 4, 204 zu einer Erhöhung des Luftdrucks in dem leeren Vorlagebehälter 4, 204. Die eingeleitete Flüssigkeit ist inkompressibel, sodass anhand des Gasinnendrucks das in den Vorlagebehälter 4, 204 eingeleitete Flüssigkeitsvolumen bestimmt werden kann. Dies erfolgt anhand des Gesetzes von Boyle-Mariotte, das den Zusammenhang zwischen Druck und Volumen eines idealen Gases unter isothermen Bedingungen beschreibt. Für die Zwecke der Erfindung genügt die Beschreibung als ideales Gas, Modifikationen und Korrekturen zur Anpassung des Berechnungsverfahrens an die realen Gegebenheiten können jedoch auch vorgesehen sein.

Im Grundzustand entspricht das Volumen $V_1$ des leeren Vorlagebehälters 4, 204 dem Volumen $V_1$ des in ihm befindlichen Gases. Dieses hat in dem ersten Zustand den Druck $p_1$, der insbesondere dem Umgebungsdruck entspricht. Nach dem Einleiten eines Volumens $V_3$ von Flüssigkeit nimmt das im Vorlagebehälter 4, 204 befindliche Gas ein reduziertes Volumen $V_2$ ein, das sich nach der Differenz $V_2 = V_1 - V_3$ berechnet. Da das Flüssigkeitsvolumen $V_3$ inkompressibel ist, erhöht sich der Druck $p_2$ des Gases durch das reduzierte Volumen gemäß der Gleichung:

$$p_1 * V_1 = p_2 * V_2$$

Hieraus folgt zur Berechnung des eingeleiteten Flüssigkeitsvolumens $V_3$:

$$V_3 = V_1 * (1 - p_1/p_2)$$

Alternativ oder zusätzlich können andere Ansätze zur Berechnung des eingeleiteten Flüssigkeitsvolumens anhand des Gasinnendrucks $p_1$, $p_2$ verwendet werden.

Der Gasinnendrucks $p_1$, $p_2$ wird bei dem Ausführungsbeispiel durch das Druckerfassungselement 222a erfasst, dass die Leistungsaufnahme einer elektrischen Dosierpumpe 222 erfasst, mittels derer die zweite Flüssigkeit an der Chemikalienzufuhr 2, 202 zugeführt wird. Bei dem Ausführungsbeispiel wird ein Reinigungsmittel von der Chemikalienzufuhr 2, 202 und durch das Rückschlagventil 2a, 202a in die Einspeiseleitung 10, 210 gepumpt. Die Pumpe 222 arbeitet dabei gegen den Gasinnendruck in dem Vorlagebehälter 4, 204, sodass mit zunehmendem Gasinnendruck zum Erreichen der gleichen Einleitungsrate des Reinigungsmittels eine höhere Leistung der Dosierpumpe 222 notwendig wird.

Bei dem Ausführungsbeispiel wird als Dosierpumpe 222 eine Magnet-Membrandosierpumpe des Typs gamma/X der Firma ProMinent® verwendet. Diese Pumpe besitzt eine Magnetregelung, die den anstehenden Gegendruck misst und ausgibt. Im Betrieb wird für den Volumenstrom z. B. ein Sollwert von 27 ml/min eingegeben. Die Regelung der Pumpe zeigt dann den Gegendruck an. Dieser Gegendruck enthält noch den Druck der Flüssigkeit beim Einspeisen des Fluids und Reibungsverluste in der Leitung. Diese Drücke sind jedoch konstant, so dass sich aus den Druckdifferenzen der Gasinnendruck im Vorlagebehälter 4, 204 oder allgemein in einem Vorratsvolumen ergibt.

Das heißt, dass in dem Vorlagebehälter 4, 204 befindliche Flüssigkeitsvolumen wird anhand des Gasinnendrucks bestimmt. Dies ist insbesondere dann von Vorteil, wenn keine oder nur ungenaue Möglichkeiten zur direkten Messung des Volumens zur Verfügung stehen, etwa bei einer Durchflussmessung an der Wasserzufuhr 1, 201 oder in der Einspeiseleitung 10, 210.

Zugleich ist bei dem Ausführungsbeispiel vorgesehen, dass die elektrische Dosierpumpe 222 beim Einspeisen des Reinigungsmittels das Volumen des von ihr gepumpten Reinigungsmittels misst. In anderen Ausführungsbeispielen kann dazu ein Durchflusssensor verwendet werden.

Bei weiteren Ausführungsbeispielen kann alternativ oder zusätzlich ein anderer Sensor zur Messung des Flüssigkeitsvolumens in dem Vorlagebehälter 4, 204 vorgesehen sein. Beispielsweise kann ein Schwimmer verwendet werden oder die Masse der eingeleiteten Flüssigkeit kann bestimmt werden.

In dem Vorlagebehälter 4, 204 kommt es zum Vermischen des Wassers mit dem Reinigungsmittel, was in den Figuren 1 und 2 durch einen runden Pfeil angedeutet wird. Dabei können die erste und zweite Flüssigkeit in dem Flüssigkeitsgemisch homogen verteilt werden. Bei dem Ausführungsbeispiel erfolgt zudem das Ausstoßen des Gemischs so, dass eine weitgehend homogene Vermischung erreicht wird, insbesondere beim Auftrag auf eine Oberfläche, das heißt kurz nach dem Verlassen des Systems. Das Vermischen kann bei einem weiteren Ausführungsbeispiel durch eine zusätzliche Mischvorrichtung (nicht dargestellt) verbessert werden.

Aus dem eingespeisten Volumen des Reinigungsmittels und dem gesamten Flüssigkeitsvolumen im Vorlagebehälter 4, 204 ergibt sich ein aktuelles Mischungsverhältnis zwischen dem Wasser und dem Reinigungsmittel. Das Mischungsverhältnis kann gegebenenfalls durch Ansteuern der Wasserzufuhr 1, 201, etwa mittels der Drossel 1b, 201b und des elektromagnetischen Wasserventils 201c, und/oder der Chemikalienzufuhr 2, 202 mittels der Dosierpumpe 222 angepasst werden.

Zugleich wird bei dem Ausführungsbeispiel das Flüssigkeitsvolumen in dem Vorlagebehälter 4, 204 mit einem vorgegebenen Zielvolumen verglichen. Wenn das Zielvolumen erreicht wird, was insbesondere dem Erreichen eines bestimmten Zieldrucks im Vorlagebehälter 4, 204 entspricht, wird die Einleitung von Wasser und Reinigungsmittel beendet, bei dem Ausführungsbeispiel durch Schließen des elektromagnetischen Wasserventils 201c und Stoppen der elektrischen Dosierpumpe an der Chemikalienzufuhr 2, 202.

Bei dem Ausführungsbeispiel ist vorgesehen, dass nach dem Erreichen des Zielvolumens das Gemisch aus dem Vorlagebehälter 4, 204 mittels Druckluft ausgestoßen wird. Hierfür wird an der Luftzufuhr 203 Druckluft eingeleitet. Die Luftzufuhr 203 übernimmt also die Rolle einer Entnahmeeinrichtung 223; alternativ oder zusätzlich kann bei anderen Ausführungsbeispielen eine andere Entnahmeeinrichtung 223 vorgesehen sein, zum Beispiel eine Pumpe zum Ausstoß der Flüssigkeit aus dem Vorlagebehälter 4, 204. Es ist ein Druck von 4 bis 8 bar, bevorzugt 6 bar, vorgesehen. Das Rückschlagventil 201a verhindert, dass der Druck gegen die Fließrichtung in der Einspeiseleitung 10, 210 abgeleitet wird, und die mit Druck beaufschlagte Luft erreicht den Vorlagebehälter 4, 204. Zugleich wird das Absperrventil 15, 215 geöffnet. Da die Entnahmeöffnung 12, 212 im unteren Bereich des Vorlagebehälter 4, 204 angeordnet ist, kann die darin befindliche Flüssigkeitsmenge im Wesentlichen vollständig ausgestoßen werden.

Bei weiteren Ausführungsbeispielen kann vorgesehen sein, dass das Absperrventil 15, 215 als Überdruckventil ausgebildet ist und automatisch beim Erreichen eines bestimmten Drucks öffnet, beispielsweise bei einem Druck von 6 bar. Zudem können weitere Ventile vorgesehen sein, etwa in den Verteilerleitungen 6, 7, 206, 207.

Das aus dem Vorlagebehälter 4, 204 ausgestoßene Flüssigkeitsgemisch wird durch das T-Stück 5, 205 in die Verteilerleitungen 6, 7, 206, 207 geleitet und gelangt von dort zu Ausstoßelementen 8, 9, die in Figur 1 nicht näher dargestellt sind. Bei dem Ausführungsbeispiel handelt es sich dabei um Düsen 8, 9 einer Fahrzeugwaschanlage.

Bei dem Ausführungsbeispiel wird so lange Druckluft in den Vorlagebehälter 4, 204 eingeleitet, bis dieser vollständig entleert ist. Dabei ist ferner vorgesehen, dass auch die anschließenden Leitungen, insbesondere das T-Stück 5, 205 und die Verteilerleitungen 6, 7, 206, 207 sowie gegebenenfalls die Düsen 8, 9 geleert werden und das Flüssigkeitsgemisch vollständig durch die Düsen 8, 9 ausgestoßen wird. Auf diese Weise werden ein unnötig langes Verweilen möglicherweise aggressiver Chemikalien in den Komponenten des Systems sowie ein Nachtropfen vermieden.

In einem letzten Schritt wird die Zuführung der Druckluft beendet und das Absperrventil 15, 215 geschlossen. Dabei bleibt der Vorlagebehälter 4, 204 mit Luft bei Umgebungsdruck gefüllt.

In weiteren Ausführungsbeispielen kann der Ausstoß auf andere Art erfolgen, zum Beispiel durch Einleiten von Wasser oder einem anderen Fluid unter Druck oder durch Absaugen aus dem Vorlagebehälter 4, 204 mittels einer Pumpe und Ausstoßen durch die Verteilerleitung 6, 7, 206, 207.

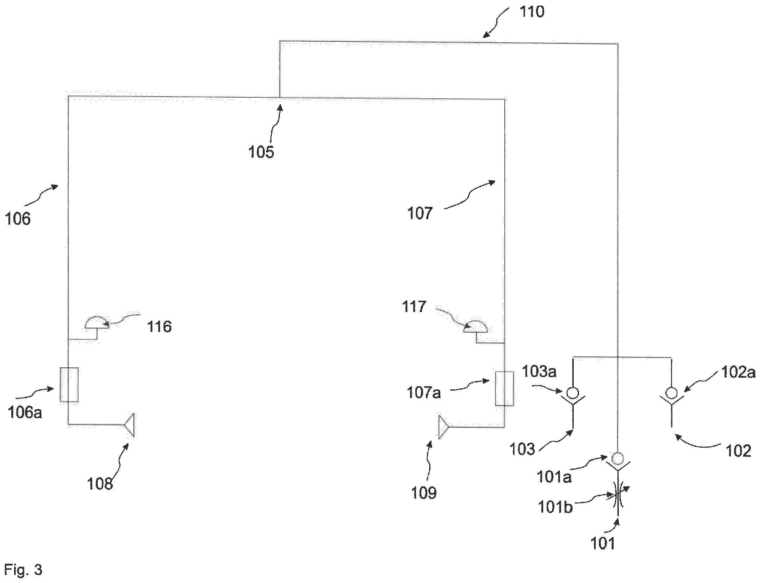

Mit Bezug zu Figur 3 wird ein weiteres Ausführungsbeispiel der erfindungsgemäßen Vorrichtung erläutert. Der vorliegende Aufbau ist grundsätzlich analog zu dem in den Figuren 1 und 2 gezeigten. Es werden nachfolgend daher vor allem die Unterschiede erläutert.

Bei dem weiteren Ausführungsbeispiel ist vorgesehen, dass der Vorlagebehälter durch eine Einspeiseleitung 110 gebildet wird. Die Einspeiseleitung 110 ist dabei so ausgebildet, dass sie ein genügend großes Volumen für die Bereitstellung des gewünschten Gemischs umfasst.

Beispielsweise ist eine 4 m lange Einspeiseleitung 110 vorgesehen, die bei einem Innendurchmesser von 4 mm ein Volumen von etwa 50 ml und bei einem Innendurchmesser von 6 mm ein Volumen von etwa 113 ml Flüssigkeit fasst. Die Einspeiseleitung 110 führt zu einem T-Stück 105, das auf unterschiedliche Weise ausgebildet sein kann, etwa um eine Rotation um die Achse der Einspeiseleitung 110 zu ermöglichen. Von diesem T-Stück 105 zweigen stromabwärts Verteilerleitungen 106, 107 ab, deren Länge beispielsweise insgesamt 5 m beträgt, was bei einem Innendurchmesser von 4 mm einem Volumen von etwa 63 ml entspricht. Am Ende der Verteilerleitungen 106, 107 sind Düsen 108, 109 vorgesehen, durch die eine Flüssigkeit herausgespritzt werden kann, beispielsweise auf Felgen eines Fahrzeugs in einer Fahrzeugwaschanlage. Die Einspeiseleitung 110 und die Verteilerleitungen 106, 107 bilden also ein Vorratsvolumen, in das Fluide eingeleitet werden können

Stromaufwärts am anderen Ende Einspeiseleitung 110 sind eine Wasserzufuhr 101 mit einer Drossel 101b und einem Rückschlagventil 101a, eine Chemikalienzufuhr 102 mit einem Rückschlagventil 102a und eine Luftzufuhr 103 mit einem Rückschlagventil 103a angeschlossen.

Bei dem hier gezeigten Ausführungsbeispiel ist vorgesehen, dass durch die Drossel 101b ein konstanter Wasserstrom in die Einspeiseleitung 110 geleitet wird. Ferner ist vorgesehen, dass an der Chemikalienzufuhr 102 ein Reinigungsmittel eingeimpft wird, wobei eine elektrische Dosierpumpe verwendet wird. In den Verteilerleitungen 106, 107 ist jeweils ein gas- und flüssigkeitsdichtes Ventil 106a, 107a vorgesehen, das jeweils durch ein elektrisches Signal bei einem bestimmten Druck, etwa 5 bar, geöffnet werden kann. Vor jedem Ventil 106a, 107a ist jeweils eine Druckblase 116, 117 bei der Verteilerleitung 106,107 angeordnet. Bei den Druckblasen 160, 117 wird, wie bei dem Vorlagebehältern 4, 204, Gas komprimiert. Daher wird beim Einleiten von Wasser und Reinigungsmittel ein Druck in der Einspeiseleitung 110 und den Verteilerleitungen 106, 107 aufgebaut. Dieser Druck wird während des Einleitens des Reinigungsmittels anhand der Leistungsaufnahme der elektrischen Dosierpumpe an der Chemikalienzufuhr 102 gemessen. Auf diesem Wege kann, wie oben beschrieben, das Gesamtvolumen der aktuellen eingeleiteten Flüssigkeit bestimmt werden. Gleichzeitig misst die elektronische Dosierpumpe das eingeimpfte Volumen des Reinigungsmittels und steuerte die Zuleitung so, dass ein vorgegebenes Mischungsverhältnis erreicht wird.

Beim Erreichen des vorgegebenen Mischungsverhältnisses und eines vorgegebenen Volumens wird das in der Einspeiseleitung 110 und den Verteilerleitungen 106, 107 befindliche Gemisch ausgestoßen, indem bei der Luftzufuhr 103 Druckluft mit einem hohen Druck, zum Beispiel 6 bar, zugeführt wird. Die Ventile 106a, 107a werden geöffnet, zum Beispiel mittels elektrischer Signale, und das Gemisch kann durch die Düsen 108, 109 herausgespritzt werden.

Bei dem Ausführungsbeispiel ist ferner vorgesehen, dass nach der Ausgabe des Gemischs ein Wasserstrom durch die Düsen 108, 109 ausgegeben wird, wobei die Einspeiseleitung 110, das T-Stück 105 und die Verteilerleitungen 106, 107 sowie die Düsen 108, 109 gespült werden. Zudem kann ein Nachlaufen vermieden werden, indem die Düsen 108, 109 am Ende mit Druckluft beaufschlagt werden, um Reste von Flüssigkeiten auszustoßen.

Es kann bei der Vorrichtung zu einer Vermischung der eingeleiteten Flüssigkeiten kommen, in dem diese gleichzeitig eingeleitet werden. Eine homogene Vermischung muss jedoch nicht zwangsläufig erreicht werden, sondern es kann genügen, dass sich die Komponenten des Gemischs durch den Auftrag mit hohem Druck außerhalb der Vorrichtung homogen vermischen.

Bei einem weiteren Ausführungsbeispiel werden die Flüssigkeiten durch die gleiche Zuführungseinheit bereitgestellt, insbesondere nacheinander. Beispielsweise kann eine Pumpe vorgesehen sein, die zunächst Wasser und anschließend ein Reinigungsmittel in den Vorlagebehälter 4, 204 einleitet.

Bei einem noch weiteren Ausführungsbeispiel wird auf die Druckblase 116,117 bei der Vorrichtung gemäß Figur 3 verzichtet. In diesem Fall wird das in der Einspeiseleitung 110 und den Verteilerleitungen 106,107 befindliche Gas durch die zugeführte Flüssigkeit verdrängt, sodass sich das Gas im oberen Teil der Einspeiseleitung 110 sammelt und dort komprimiert wird. In diesem oberen Bereich befindet sich auch die Luftzufuhr 103, über welche Druckluft mit hohem Druck zugeführt werden kann.

In diesem Fall werden somit zunächst die Absperreinrichtungen 106a, 107a geschlossen und es werden die Flüssigkeiten zudosiert, und zwar gegen den Gasdruck im Inneren der Einspeiseleitung 110 und den Verteilerleitungen 106,107. Da das System gasdicht und druckdicht geschlossen ist, erhöht sich der Gasdruck in dem Vorratsvolumen, welches von der Einspeiseleitung 110 und den Verteilerleitungen 106,107 gebildet ist. Die Geometrie der Einspeiseleitung 110 und der Verteilerleitungen 106,107 ist so ausgebildet, dass das Gas an der zudosierten Flüssigkeit vorbeiströmen kann, so dass sich das Gas im oberen Teil des Vorratsvolumens sammelt. Beim Ausstoßvorgang wird im oberen Teil des Vorratsvolumens mittels der Luftzufuhr 103 Druckluft mit einem Druck zugeführt. Gleichzeitig werden die Absperreinrichtungen 106a, 107a geöffnet. Der Druck der Druckluft ist insbesondere größer ist als der Druck des komprimierten Gases in dem Vorratsvolumen. Er kann jedoch auch geringer als der Druck des komprimierten Gases in dem Vorratsvolumen sein, da das Öffnen der Absperreinrichtungen 106a, 107a zu einem Druckabfall des Gases im oberen Teil des Vorratsvolumens führt. Durch die Druckluft wird dann die Flüssigkeit aus dem Vorratsvolumen ausgetrieben.

BEZUGSZEICHENLISTE

| 1, 101, 201 | Erste Zuführungsleitung, Wasserzufuhr |
| 1a, 101a, 201a | Rückschlagventil |
| 1b, 101b, 201b | Nadelventil, Drossel |
| 201c | Elektromagnetisches Wasserventil |

| 2, 102, 202 | Zweite Zuführungsleitung, Chemikalienzufuhr |
| 2a, 102a, 202a | Rückschlagventil |
| 3, 103, 203 | Luftzufuhr |
| 3a, 103a, 203a | Rückschlagventil |
| 4, 204 | Vorlagebehälter |
| 5, 105, 205 | Verzweigungsleitung, T-Stück |
| 6, 7, 106, 107, 206, 207 | Verteilerleitung |
| 106a, 107a | Absperreinrichtung, Überdruckventil |
| 8, 9, 108, 109 | Ausstoßelement, Düse |
| 10, 110, 210 | Einspeiseleitung |
| 11, 211 | Zuleitungsöffnung |
| 12,212 | Entnahmeöffnung |
| 15, 215 | Absperreinrichtung, Absperrventil |
| 116, 117 | Druckblase |
| 222 | Zuführungseinheit, elektrische Dosierpumpe |
| 222a | Druckerfassungselement |
| 223 | Entnahmeeinrichtung, Gaszuführeinheit |
| 230 | Steuereinheit |
| 231 | Erfassungseinheit |

**Patentansprüche**

1. Flüssigkeitsausstoßvorrichtung für eine Fahrzeugwaschanlage; mit

   einem Vorratsvolumen (4, 204);
   einer stromaufwärts mit dem Vorratsvolumen (4, 204) gekoppelten ersten Zuführungsleitung (1, 101, 201) zum Zuführen einer ersten Flüssigkeit;
   einer stromaufwärts mit dem Vorratsvolumen (4, 204) gekoppelten Zuführungseinheit (222) zum Zuführen einer zweiten Flüssigkeit; und
   einer stromabwärts mit dem Vorratsvolumen (4, 204) gekoppelten Entnahmeleitung zum Ableiten einer auszustoßenden Flüssigkeit mit einer Absperreinrichtung (15, 215) zum Absperren eines Flüssigkeitsflusses durch die Entnahmeleitung;
   wobei das Vorratsvolumen (4, 204) gasdicht abgeschlossen ist, sodass es beim Einleiten der ersten und/oder zweiten Flüssigkeit zu einer Erhöhung eines Gasinnendrucks in dem Vorratsvolumen (4, 204) kommt;
   die Flüssigkeitsausstoßvorrichtung eine Erfassungseinheit (231) zum Erfassen des zugeleiteten Volumens der zweiten Flüssigkeit in das Vorratsvolumen (4, 204) und des Gasinnendrucks in dem Vorratsvolumen (4, 204) umfasst;
   eine mit der Erfassungseinheit (231) und der Zuführungseinheit (222) gekoppelte Steuereinheit (230) das Zuführen der zweiten Flüssigkeit anhand des erfassten zugeleiteten Volumens der zweiten Flüssigkeit und des Gasinnendrucks so steuert, dass ein vorgegebenes Mischungsverhältnis der ersten und zweiten Flüssigkeit in dem Vorratsvolumen (4, 204) erreicht wird; und
   die Zuführungseinheit (222) ein Druckerfassungselement (222a) zum Erfassen des Gasinnendrucks umfasst, **dadurch gekennzeichnet,**
   **dass** das Druckerfassungselement (222a) dazu eingerichtet ist, eine Leistungsaufnahme der Zuführungseinheit (222) zu erfassen und anhand der Leistungsaufnahme den Gasinnendruck zu erfassen.

2. Vorrichtung gemäß Anspruch 1, **dadurch gekennzeichnet, dass** die Steuereinheit (230) dazu eingerichtet ist, anhand des erfassten Gasinnendrucks und des eingeleiteten Volumens der zweiten Flüssigkeit ein aktuelles Mischungsverhältnis der Flüssigkeit in dem Vorratsvolumen zu bestimmen.

3. Vorrichtung gemäß einem der vorhergehenden Ansprüche, **dadurch gekennzeichnet, dass** die Steuereinheit (230) mit einer Entnahmeeinrichtung (223) gekoppelt und dazu eingerichtet ist, beim Erreichen eines vorgegebenen Flüssigkeitsvolumens und des vorgegebenen Mischungsverhältnisses einen Ausstoßvorgang mittels der Entnahmeeinrichtung (223) zu starten.

4. Vorrichtung gemäß Anspruch 3, **dadurch gekennzeichnet, dass** die Entnahmeeinrichtung (223) so ausgebildet ist, dass eine Entnahmerate größer als die Summe einer maximal erreichbaren ersten und zweiten Zuführrate ist.

5. Vorrichtung gemäß einem der vorhergehenden Ansprüche, **dadurch gekennzeichnet, dass** die erste Flüssigkeit mit einem konstanten Volumenstrom einleitbar ist.

6. Vorrichtung gemäß einem der vorhergehenden Ansprüche, **dadurch gekennzeichnet, dass** das Vorratsvolumen (4, 204) von einer Flüssigkeitsleitung gebildet ist.

7. Vorrichtung gemäß Anspruch 6, **dadurch gekennzeichnet, dass** die Geometrie der Flüssigkeitsleitung so ausgebildet ist, dass das in der Flüssigkeitsleitung befindliche Gas an einer zudosierten Flüssigkeit vorbeiströmen kann, so dass sich das Gas im oberen Teil der Flüssigkeitsleitung sammelt.

8. Vorrichtung gemäß einem der Ansprüche 3 bis 4, **dadurch gekennzeichnet, dass** die Entnahmeeinrichtung (223) eine Gaszuführeinheit (223) umfasst und die Steuereinheit (230) dazu eingerichtet ist, beim Ausstoßvorgang die Absperreinrichtung (15, 215) zu öffnen und durch die Gaszuführeinheit (223) ein Austreibgas in das Vorratsvolumen (4, 204) so einzuleiten, dass das Gemisch mit der ersten und zweiten Flüssigkeit aus dem Vorratsvolumen (4, 204) ausgetrieben wird.

9. Vorrichtung gemäß einem der vorhergehenden Ansprüche, **dadurch gekennzeichnet, dass** die erste (1, 101, 201) und/oder eine zweite (2, 102, 202) Zuführungsleitung in einem oberen Bereich mit dem Vorratsvolumen (4, 204) gekoppelt ist.

10. Verfahren zum Betreiben einer Flüssigkeitsausstoßvorrichtung für eine Fahrzeugwaschanlage; bei dem

   eine erste und eine zweite Flüssigkeit in ein Vorratsvolumen (4, 204) eingeleitet werden;
   wobei die zweite Flüssigkeit mittels einer Zuführungseinheit (222) zugeführt wird;
   eine auszustoßende Flüssigkeit durch eine mit dem Vorratsvolumen (4, 204) gekoppelte Absperreinrichtung (15, 215), die ein Flüssigkeitsfluss sperrt, abgeleitet wird;
   das Vorratsvolumen (4, 204) gasdicht abgeschlossen ist, sodass es beim Einleiten der ersten Flüssigkeit zu einer Erhöhung eines Gasinnendrucks des Vorratsvolumens (4, 204) kommt;
   beim Einleiten der zweiten Flüssigkeit der Gasinnendruck des Vorratsvolumens (4, 204) und das zugeleitete Volumen der zweiten Flüssigkeit erfasst wird;
   das Einleiten der zweiten Flüssigkeit in Abhängigkeit von dem erfassten zugeleiteten Volumen der zweiten Flüssigkeit und dem erfassten Gasinnendruck in dem Vorratsvolumen (4, 204) so gesteuert wird, dass ein vorgegebenes Mischungsverhältnis der ersten und zweiten Flüssigkeit in dem Vorratsvolumen (4, 204) erreicht wird; und
   der Gasinnendruck mithilfe eines Druckerfassungselements (222a) der Zuführungseinheit (222) erfasst wird, **dadurch gekennzeichnet, dass**
   durch das Druckerfassungselement (222a) eine Leistungsaufnahme der Zuführungseinheit (222) erfasst wird und anhand der Leistungsaufnahme der Gasinnendruck erfasst wird.

11. Verfahren gemäß Anspruch 10, **dadurch gekennzeichnet, dass** ein aktuelles Flüssigkeitsvolumen in dem Vorratsvolumen (4, 204) erfasst und die Flüssigkeit aus dem Vorratsvolumen (4, 204) ausgestoßen wird, wenn ein vorgegebenes Flüssigkeitsvolumen in dem Vorratsvolumen (4, 204) erreicht wird.

12. Verfahren gemäß Anspruch 10 oder 11, **dadurch gekennzeichnet, dass** die Flüssigkeit aus dem Vorratsvolumen (4, 204) ausgestoßen wird, wenn das vorgegebene Mischungsverhältnis der ersten und zweiten Flüssigkeit im Vorratsvolumen (4, 204) erreicht wurde.

13. Verfahren gemäß einem der Ansprüche 10 bis 12, **dadurch gekennzeichnet, dass** die Flüssigkeit mit einer Entnahmerate ausgestoßen wird, die größer als die Summe einer maximal erreichbaren ersten und zweiten Zuführrate ist.

14. Verfahren gemäß einem der Ansprüche 10 bis 13, **dadurch gekennzeichnet, dass** der Wert des eingeleiteten Volumens der ersten und zweiten Flüssigkeit anhand des erfassten Gasinnendrucks des Vorratsvolumens (4, 204) bestimmt wird.

15. Verfahren gemäß einem der Ansprüche 10 bis 14, **dadurch gekennzeichnet, dass** ein aktuelles Mischungsverhältnis anhand eines erfassten gesamten Flüssigkeitsvolumens und eines anhand eines Durchflusses gemessenen zugeführten Volumens der zweiten Flüssigkeit bestimmt wird.

**Claims**

1. Liquid ejection device for a vehicle washing facility; having

   a storage volume (4, 204);
   a first supply line (1, 101, 201) coupled upstream to the storage volume (4, 204) for supplying a first liquid;
   a supply unit (222) coupled upstream to the storage volume (4, 204) for supplying a second liquid; and
   a removal line coupled downstream to the storage volume (4, 204) for discharging a liquid to be ejected, with a shut-off device (15, 215) for shutting off a liquid flow through the removal line;
   wherein the storage volume (4, 204) is sealed gas-tightly, so that an increase in an internal gas pressure occurs in the storage volume (4, 204) when the first and/or second liquid is introduced;
   the liquid ejection device comprises a detection unit (231) for detecting the supplied volume of the second liquid into the storage volume (4, 204) and the internal gas pressure in the storage volume (4, 204);
   a control unit (230) coupled to the detection unit (231) and the supply unit (222) controls the supply of the second liquid on the basis of the detected supplied volume of the second liquid and the internal gas pressure in such a way that a predetermined mixing ratio of the first and second liquid is achieved in the storage volume (4, 204); and
   the supply unit (222) comprises a pressure detection element (222a) for detecting the internal gas pressure, **characterised in that**
   the pressure detection element (222a) is designed to detect a power consumption of the supply unit (222) and to detect the internal gas pressure on the basis of the power consumption.

2. Device according to claim 1, **characterised in that** the control unit (230) is designed to determine a current mixing ratio of the liquid in the storage volume on the basis of the detected internal gas pressure and the introduced volume of the second liquid.

3. Device according to one of the preceding claims, **characterised in that** the control unit (230) is coupled to a removal device (223) and is designed to start an ejection process by means of the removal device (223) when a predetermined liquid volume and the predetermined mixing ratio are reached.

4. Device according to claim 3, **characterised in that** the removal device (223) is designed such that a removal rate is greater than the sum of a maximum achievable first and second supply rates.

5. Device according to one of the preceding claims, **characterised in that** the first liquid can be introduced with a constant volume flow.

6. Device according to one of the preceding claims, **characterised in that** the storage volume (4, 204) is formed by a liquid line.

7. The device according to claim 6, **characterised in that** the geometry of the liquid line is such that the gas in the liquid line can flow past a metered liquid so that the gas collects in the upper part of the liquid line.

8. Device according to one of claims 3 to 4, **characterised in that** the removal device (223) comprises a gas supply unit (223) and the control unit (230) is designed to open the shut-off device (15, 215) during the ejection process and to introduce an expulsion gas into the storage volume (4, 204) through the gas supply unit (223) in such a way that the mixture comprising the first and second liquids is expelled from the storage volume (4, 204).

9. Device according to one of the preceding claims, **characterised in that** the first (1, 101, 201) and/or a second (2, 102, 202) supply line is coupled in an upper region to the storage volume (4, 204).

10. Method for operating a liquid ejection device for a vehicle washing facility; in which

    a first and a second liquid are introduced into a storage volume (4, 204);
    wherein the second liquid is supplied by means of a supply unit (222);
    a liquid to be ejected is discharged by a shut-off device (15, 215) which is coupled to the storage volume (4, 204) and which shuts off a liquid flow;
    the storage volume (4, 204) is sealed gas-tightly so that an increase in the internal gas pressure of the storage volume (4, 204) occurs when the first liquid is introduced;

when the second liquid is introduced, the internal gas pressure of the storage volume (4, 204) and the supplied volume of the second liquid is detected;

the introduction of the second liquid is controlled as a function of the detected supplied volume of the second liquid and the detected internal gas pressure in the storage volume (4, 204) in such a way that a predetermined mixing ratio of the first and second liquid is achieved in the storage volume (4, 204); and

the internal gas pressure is detected with the aid of a pressure detection element (222a) of the supply unit (222), **characterised in that**

the pressure detection element (222a) detects a power consumption of the supply unit (222) and the internal gas pressure is detected on the basis of the power consumption.

11. Method according to claim 10, **characterised in that** a current volume of liquid in the storage volume (4, 204) is detected and the liquid is expelled from the storage volume (4, 204) when a predetermined volume of liquid in the storage volume (4, 204) is reached.

12. Method according to claim 10 or 11, **characterised in that** the liquid is expelled from the storage volume (4, 204) when the predetermined mixing ratio of the first and second liquids in the storage volume (4, 204) has been reached.

13. Method according to one of claims 10 to 12, **characterised in that** the liquid is discharged at a removal rate greater than the sum of a maximum achievable first and second supply rates.

14. Method according to one of claims 10 to 13, **characterised in that** the value of the introduced volume of the first and second liquid is determined on the basis of the detected internal gas pressure of the storage volume (4, 204).

15. Method according to one of claims 10 to 14, **characterised in that** a current mixing ratio is determined on the basis of a total detected volume of liquid and a supplied volume of the second liquid measured on the basis of a flow rate.

**Revendications**

1. Dispositif d'éjection de liquide pour une installation de lavage de véhicules pourvu

d'un volume de réserve (4, 204) ;

d'une première conduite d'alimentation (1, 101, 201) couplée en amont avec le volume de réserve (4, 204), permettant d'amener un premier liquide ;

d'une unité d'alimentation (222) couplée en amont avec le volume de réserve (4, 204), permettant d'amener un deuxième liquide ; et

d'une conduite de prélèvement couplée en amont avec le volume de réserve (4, 204), permettant de dériver un liquide à expulser avec un dispositif de blocage (15, 215) permettant le blocage d'un écoulement de liquide par la conduite de prélèvement ;

dans lequel le volume de réserve (4, 204) est fermé de manière étanche vis-à-vis des gaz de sorte que, lors de l'introduction du premier et/ou du deuxième liquide, il se produit une augmentation d'une pression intérieure de gaz dans le volume de réserve (4, 204) ;

le dispositif d'éjection de liquide comprend une unité de détection (231) permettant la détection du volume alimenté du deuxième liquide dans le volume de réserve (4, 204) et de la pression intérieure du gaz dans le volume de réserve (4, 204) ;

une unité de commande (230) couplée avec l'unité de détection (231) et l'unité d'alimentation (222) permettant de commander le volume alimenté du deuxième liquide dans le volume de réserve (4, 204) de sorte qu'un ratio de mélange du premier et du deuxième liquide se trouve atteint dans le volume de réserve (4, 204) ; et

l'unité d'alimentation (222) comprend un élément de détection de pression (222a) permettant la détection de la pression intérieure de gaz,

**caractérisé en ce**

**que** l'élément de détection de pression (222a) est conçu pour détecter une augmentation de puissance de l'unité d'alimentation (222) et pour détecter la pression intérieure de gaz à l'aide de l'enregistrement de la puissance.

2. Dispositif selon la revendication 1, **caractérisé en ce que** l'unité de commande (230) est conçue pour, à l'aide de la pression intérieure de gaz détectée et du volume alimenté du deuxième liquide, déterminer un rapport de mélange actuel du liquide dans le volume de réserve.

**3.** Dispositif selon l'une des revendications précédentes, **caractérisé en ce que** l'unité de commande (230) est couplée avec un dispositif de prélèvement (223) et est conçue, lorsqu'un volume de liquide prédéfini et le rapport de mélange prédéfini sont atteints, pour démarrer un processus d'expulsion au moyen du dispositif de prélèvement (223).

**4.** Dispositif selon la revendication 3, **caractérisé en ce que** le dispositif de prélèvement (223) est conçu de telle manière qu'un taux de prélèvement est supérieur à la somme d'un premier et d'un deuxième taux d'alimentation maximal pouvant être atteint.

**5.** Dispositif selon l'une des revendications précédentes, **caractérisé en ce que** le premier liquide peut être alimenté avec un écoulement volumique constant.

**6.** Dispositif selon l'une des revendications précédentes, **caractérisé en ce que** le volume de réserve (4, 204) est constitué par une conduite de liquide.

**7.** Dispositif selon la revendication 6, **caractérisé en ce que** la géométrie de la conduite de liquide est conçue de telle manière que le gaz se trouvant dans la conduite de liquide puisse s'écouler à côté d'un liquide devant être dosé, de sorte que le gaz se rassemble dans la partie supérieure de la conduite de liquide.

**8.** Dispositif selon l'une des revendications 3 à 4, **caractérisé en ce que** le dispositif de prélèvement (223) comprend une unité d'alimentation en gaz (223) et l'unité de commande (230) est conçue, lors du processus d'expulsion, pour ouvrir le dispositif de blocage (15, 215) et, par l'unité d'alimentation en gaz (223), pour alimenter un gaz d'émission dans le volume de réserve (4, 204) de telle manière que le mélange se trouve expulsé avec les premiers et deuxième liquides à partir du volume de réserve (4, 204).

**9.** Dispositif selon l'une des revendications précédentes, **caractérisé en ce que** la première (1, 101, 201) et/ou la deuxième (2, 102, 202) conduite d'alimentation est couplée avec le volume de gaz de réserve (4, 204) dans la zone supérieure.

**10.** Procédé de mise en œuvre d'un dispositif d'éjection de liquides pour une installation de lavage de véhicules ; chez lequel

un premier et un deuxième liquide sont alimentés dans un volume de réserve (4, 204),
dans lequel le deuxième liquide est amené au moyen d'une unité d'alimentation (222) ;
un liquide à expulser est dérivé avec un dispositif de blocage (15, 215), couplé avec le volume de réserve (4, 204), qui bloque un écoulement de liquide ;
le volume de réserve (4, 204) est fermé de manière étanche aux gaz de sorte que, lors de l'introduction du premier liquide, il se produit une augmentation d'une pression interne de gaz du volume de réserve (4 ; 204) ;
lors de l'introduction du deuxième liquide, la pression interne de gaz du volume de réserve (4, 204) et le volume alimenté du deuxième liquide sont détectés ;
l'alimentation du deuxième liquide en fonction du volume alimenté détecté du deuxième liquide et la pression interne de gaz détectée dans le volume de réserve (4, 204) est commandée de telle manière qu'un rapport de mélange prédéfini des premier et deuxième liquides est atteint dans le volume de réserve (4, 204); et
la pression interne de gaz est détectée à l'aide d'un élément de détection de pression (222a) de l'unité d'alimentation (222),
**caractérisé en ce que**
une augmentation de puissance de l'unité d'alimentation (222) est détectée par l'élément de détection de pression (222a) et à l'aide de l'enregistrement de puissance de la pression interne de gaz.

**11.** Procédé selon la revendication 10, **caractérisé en ce qu'**un volume de liquide actuel est détecté dans le volume de réserve (4, 204) et le liquide est expulsé du volume de réserve (4, 204) lorsqu'un volume de liquide prédéfini est atteint dans le volume de réserve (4, 204).

**12.** Procédé selon la revendication 10 ou la revendication 11, **caractérisé en ce que** le liquide est expulsé du volume de réserve (4, 204) lorsque le rapport de mélange prédéfini des premier et deuxième liquides dans le volume de réserve (4, 204) a été atteint.

**13.** Procédé selon l'une des revendications 10 à 12, **caractérisé en ce que** le liquide est expulsé avec un taux de prélèvement qui est supérieur à la somme d'un premier et d'un deuxième taux d'alimentation pouvant être atteints au maximum.

**14.** Procédé selon l'une des revendications 10 à 13, **caractérisé en ce que** la valeur du volume dérivé des premier et deuxième liquides est déterminée à l'aide de la pression interne de gaz du volume de réserve (4, 204) détectée.

**15.** Procédé selon l'une des revendications 10 à 14, **caractérisé en ce qu'**un rapport de mélange actuel est déterminé à l'aide d'un volume de liquide total détecté et d'un volume du deuxième liquide alimenté mesuré à l'aide d'un écoulement.

Fig. 1

2/3

Fig. 2

Fig. 3

EP 3 861 417 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011003615 A1
- WO 0205047 A1